# FASCICULE DE BREVET EUROPEEN

(11) **EP 2 411 117 B1**
(45) Date de publication et mention de la délivrance du brevet: **17.12.2014**
(21) Numéro de dépôt: 10709745.3
(22) Date de dépôt: 23.03.2010
(51) Int. Cl.: B01D 49/02, F28D 9/00

(54) **SYSTEME D'EPURATION D'UN FLUIDE CHARGE DE PARTICULES PAR FORCE DE THERMOPHORESE**
VORRICHTUNG ZUM REINIGEN EINES MIT PARTIKELN BELADENEN FLUIDS DURCH THERMOPHORETISCHE KRÄFTE
DEVICE FOR PURIFYING A FLUID CHARGED WITH PARTICLES BY THERMOPHORETIC FORCES

(30) Priorité: 25.03.2009 FR 0951908
(43) Date de publication de la demande: 01.02.2012
(73) Titulaire: Commissariat à l'Énergie Atomique et aux Énergies Alternatives, 75015 Paris (FR)
(72) Inventeur: GAUTHIER, Paola, Piedecuesta (Santander) (CO); ANTONINI, Gérard, F-75012 Paris (FR); MERCIER, Pierre, F-38120 Saint Egreve (FR); TOCHON, Patrice, F-38140 Uriage (FR)
(74) Mandataire: Ilgart, Jean-Christophe
(86) Numéro de dépôt international: PCT/EP2010/053765
(87) Numéro de publication internationale: WO 2010/108914

(56) Documents cités:
- WO-A-00/23165
- WO-A-01/32294
- DE-A1- 2 044 817
- DE-U1- 29 925 003
- GB-A- 2 319 191

## Description

L'invention se rapporte de façon générale au domaine du traitement de fluide par force de thermophorèse, un tel traitement étant habituellement mis en oeuvre pour épurer des particules non désirables contenues dans le fluide.

L'invention concerne de préférence le traitement d'un gaz contenant des aérosols solides ou liquides à éliminer, et dont les particules présentent un diamètre moyen inférieur à 10 µm, voire inférieur à 1 µm.

De l'art antérieur, tel que WO00/23165, il est connu des systèmes capables de permettre un tel traitement de fluide par force de thermophorèse. Certains de ces systèmes se caractérisent par la mise en oeuvre d'une paroi froide au contact du gaz chaud à épurer, sur laquelle les particules contenues dans le gaz viennent se déposer sous l'effet de la force thermophorétique subie par ces particules, du fait de l'existence d'un gradient de température entre le gaz chaud et la paroi froide. Dans ce cas, le rendement de dépôt décroit continument, du fait du refroidissement progressif du gaz à épurer, en contact avec la paroi froide.

D'autres systèmes comprennent un premier et un second modules situés en regard l'un de l'autre et entre lesquels circule le fluide à traiter. Le premier module est destiné à être porté à une température supérieure à celle du second module de manière à engendrer un gradient de température provoquant la force de thermophorèse capable de projeter les particules à épurer, contenues dans le fluide à traiter, en direction du second module.

Néanmoins, de tels systèmes ne sont pas entièrement optimisés en termes de rapport entre la surface effective de dépôt des particules à épurer et le volume global du dispositif de traitement, de tenue en pression, et d'homogénéité de la température au sein de chacun des deux modules.

Pour remédier au moins partiellement à ces inconvénients, l'invention a pour objet un système de traitement d'un fluide par force de thermophorèse comprenant un dispositif de traitement comportant un premier et un second modules situés en regard l'un de l'autre et entre lesquels est destiné à circuler le fluide à traiter, le premier module étant destiné à être porté à une température supérieure à celle du second module de manière à engendrer un gradient de température provoquant une force de thermophorèse capable de projeter les particules à épurer, contenues dans le fluide à traiter, en direction du second module. Selon l'invention, ledit premier module comprend une succession de premiers tubes parallèles reliés entre eux et destinés à être traversés par un premier fluide caloporteur dit fluide chaud, ledit second module comprend une succession de seconds tubes parallèles reliés entre eux et destinés à être traversés par un second fluide caloporteur dit fluide froid, et les premiers tubes sont disposés en quinconce avec les seconds tubes.

De plus, ledit système comprend des moyens permettant de faire circuler ledit fluide chaud à travers les premiers tubes du premier module, des moyens permettant de faire circuler ledit fluide froid à travers les seconds tubes du second module, ainsi que des moyens permettant de faire circuler ledit fluide à traiter entre lesdits premier et second modules.

Cet agencement permet tout d'abord de présenter un rapport très élevé entre la surface effective de dépôt des particules à épurer et le volume global du dispositif de traitement, et ce en particulier grâce à la présence des seconds tubes augmentant ladite surface effective de dépôt, et également grâce à la disposition en quinconce des premiers et seconds tubes, offrant un encombrement global avantageusement réduit.

En outre, la présence des premiers et seconds tubes au sein des modules caloporteurs permet de conférer une tenue en pression satisfaisante, particulièrement intéressante en ce sens que l'injection du fluide à traiter, entre les deux modules du dispositif, peut s'effectuer à une pression très élevée, par exemple de plusieurs dizaines de bars.

Enfin, la conception des modules caloporteurs permet l'obtention d'une température homogène au sein de chacun d'eux, ce qui se traduit par une meilleure efficacité d'épuration des particules chargeant le fluide à traiter.

De préférence, le premier module est destiné à être porté à une température supérieure à celle du gaz à traiter, elle-même supérieure à celle du second module de manière à engendrer un gradient de température uniforme dans le sens du parcours du fluide à traiter, provoquant une force de thermophorèse sensiblement constante. Ainsi la température du gaz à traiter est préférentiellement comprise entre les températures du fluide caloporteur chaud et du fluide caloporteur froid.

De plus, il est souhaitable que la section de passage ménagée entre les deux modules soit d'épaisseur sensiblement constante, de manière à favoriser la stabilité du gradient thermophorétique.

Pour améliorer encore davantage l'homogénéité de température au sein des modules du dispositif de traitement, il est de préférence fait en sorte que chacun des premier et second modules est réalisé à partir d'une première tôle présentant, en alternance, des premières portions planes et des premières portions formant demi-tubes, et d'une seconde tôle présentant, en alternance, des secondes portions planes et des secondes portions formant demi-tubes, les première et seconde tôles étant plaquées l'une contre l'autre de manière à ce que les premières et secondes portions planes soient en appui deux à deux et de manière à ce que les premières et secondes portions formant demi-tubes soient en regard deux à deux, de façon à former lesdits tubes. De préférence, les portions planes ont une largeur entre les tubes sensiblement égale à la largeur des demi-tubes, cette largeur correspondant au diamètre externe de ces demi-tubes lorsque ceux-ci adoptent une section circulaire. Avec cette configuration, il est effectivement possible d'obtenir une température sensiblement identique pour les portions formant demi-tubes et les portions planes qui les relient. De préférence, chacune de ces tôles présente une épaisseur sensiblement constante.

Bien entendu, d'autres modes de fabrication sont envisageables, comme par exemple le fait de prévoir que chacun des premier et second modules est réalisé à partir de portions planes et de tubes agencés en alternance, et rapportés fixement les uns aux autres, de préférence par soudage.

Préférentiellement, le pas (p1) entre les premiers tubes et le pas (p2) entre les seconds tubes sont identiques, de préférence égaux à deux fois la largeur des premiers et seconds tubes. Ainsi, il est possible de rapprocher au plus près les tubes du premier modules des portions planes du second module, et inversement, pour l'obtention d'un encombrement minimal.

De préférence, lesdits premiers et seconds tubes présentent chacun une section circulaire, même si d'autres formes pourraient être envisagées, comme la forme carrée, rectangulaire, ou ovale plus ou moins aplatie, sans sortir du cadre de l'invention.

De préférence, le dispositif comprend un nombre de premier(s) et de second(s) modules supérieur ou égal à trois, disposés en alternance selon une direction d'empilement. Cela permet d'obtenir plusieurs espaces de passage pour le fluide à traiter, superposés selon la direction d'empilement, au sein desquels le fluide peut circuler à co-courant et/ou à contre-courant, en fonction des besoins et contraintes rencontrés.

De préférence, les deux modules sont superposés selon une direction d'empilement de sorte que la distance minimum (d), selon cette direction, entre chaque tube d'un module et la portion en regard appartenant à l'autre module, est comprise entre 2 et 10 mm, et encore plus préférentiellement entre 2 et 5 mm.

De préférence, le système comporte en outre un échangeur thermique à travers lequel circulent, avant leur entrée dans ledit dispositif de traitement, le fluide à traiter ainsi que l'un desdits fluides chaud et froid, de façon à ce que ce dernier soit réchauffé par ledit fluide à traiter.

Par ailleurs, le système comporte en outre de préférence un réchauffeur électrique permettant de réchauffer au moins l'un desdits fluides chaud et froid avant son entrée dans ledit dispositif de traitement.

Enfin, l'invention a également pour objet un procédé de traitement d'un fluide par force de thermophorèse mis en oeuvre à l'aide d'un système de traitement tel que décrit ci-dessus, le procédé étant réalisé en faisant circuler ledit fluide chaud à travers les premiers tubes du premier module, en faisant circuler ledit fluide froid à travers les seconds tubes du second module, et en faisant circuler ledit fluide à traiter entre lesdits premier et second modules.

Le procédé est préférentiellement mis en oeuvre en appliquant au moins l'un des paramètres suivantes :
- la vitesse du fluide à traiter au sein du dispositif est inférieure à 3 m/s ;
- la vitesse des fluides froid et chaud au sein du dispositif est comprise entre 20 et 60 m/s ;
- le fluide chaud présente une température supérieure ou égale à 800°C ;
- le fluide froid présente une température supérieure ou égale à 280°C ;
- le coefficient d'échange thermique des fluides froid et chaud est compris entre 100 et 300 W/m²/K, et de préférence sensiblement identique pour les deux fluides ; et
- le coefficient d'échange thermique du fluide à traiter est compris entre 20 et 100 W/m²/K.

Il est noté que de nombreuses applications peuvent être envisagées pour l'invention, comme le traitement d'un mélange gazeux issu d'un gazéifieur, d'un combusteur, d'un incinérateur ou d'un moteur automobile, ou alors le traitement des effluents gazeux contenant des particules fines issues, par exemple, de l'industrie du ciment, ou de peintures, par exemple métallurgiques. Dans le cas d'un gazéifieur ou d'un combusteur, le mélange gazeux est alors préférentiellement un mélange d'hydrogène et de monoxyde de carbone, comprenant également des impuretés et des aérosols solides et/ou liquides qui sont susceptibles de pénaliser, voire d'empoisonner les équipements aval destinés à être alimentés par le mélange gazeux, tels que des compresseurs, des turbines, ou encore des catalyseurs des unités de transformation dont le mélange gazeux constitue la matière première. C'est notamment le cas des réacteurs dits « water-gas-shift » ou encore des réacteurs dits « Fischer-Tropsch ». L'invention permet alors avantageusement un traitement visant à éliminer les aérosols solides et/ou liquides contenus dans ce type de mélange gazeux, même ceux dont les particules constitutives ont un diamètre moyen inférieur à 1 µm. Un tel traitement est également dénommé « dépoussiérage ».

Comme mentionné ci-dessus, l'invention s'applique également au traitement des gaz d'échappement de moteur à combustion, de préférence pour automobiles.

D'autres avantages et caractéristiques de l'invention apparaîtront dans la description détaillée non limitative ci-dessous.

Cette description sera faite au regard des dessins annexés parmi lesquels ;
- la figure 1 représente une vue schématique en perspective d'un dispositif de traitement selon un premier mode de réalisation préféré de la présente invention ;
- la figure 2 représente une vue en coupe transversale prise selon le plan transversal P de la figure 1 ;
- la figure 2a représente une vue en perspective de l'une des tôles constitutives des modules du dispositif de traitement montré sur les figures précédentes ;

- la figure 2b représente une vue éclatée d'une alternative de réalisation pour chacun des modules du dispositif de traitement montré sur les figures 1 et 2 ;

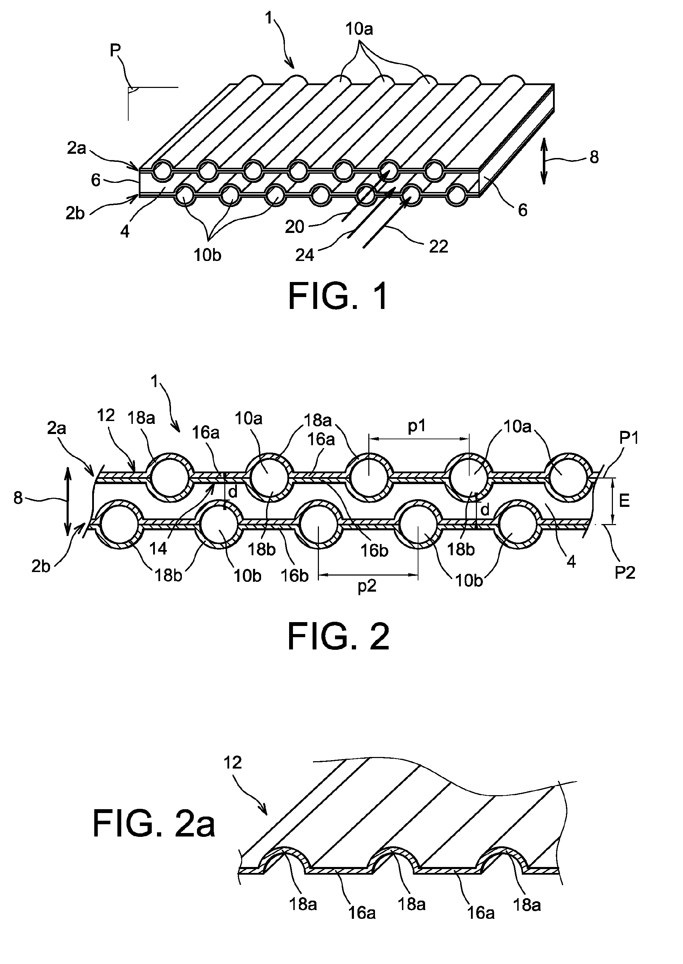

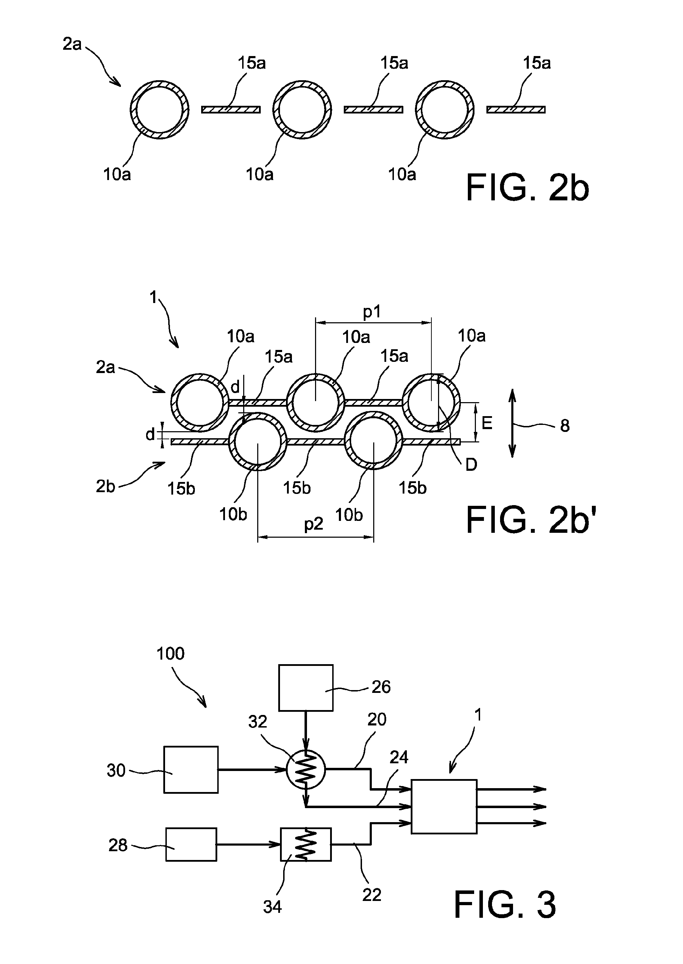

- la figure 2b' représente les deux modules assemblés, chacun obtenu de la façon montrée sur la figure précédente ;
- la figure 3 représente une vue schématique d'un système de traitement selon un premier mode de réalisation préféré de la présente invention, ce système incorporant le dispositif de traitement montré sur les figures précédentes ;

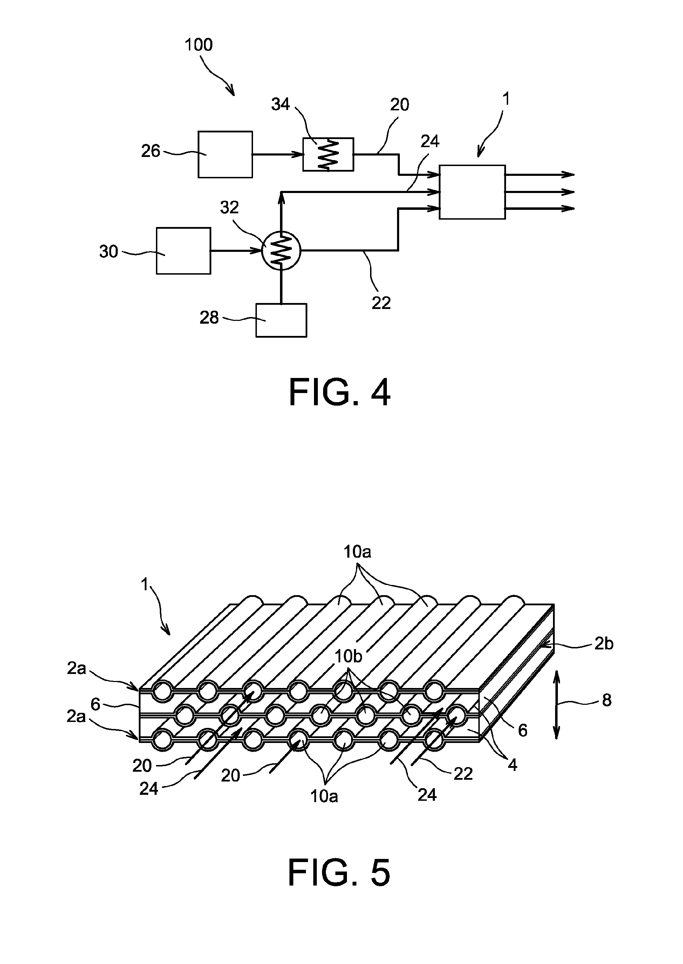

- la figure 4 représente une vue schématique d'un système de traitement selon un second mode de réalisation préféré de la présente invention ;
- la figure 5 représente une vue schématique en perspective d'un dispositif de traitement selon un second mode de réalisation préféré de la présente invention ; et

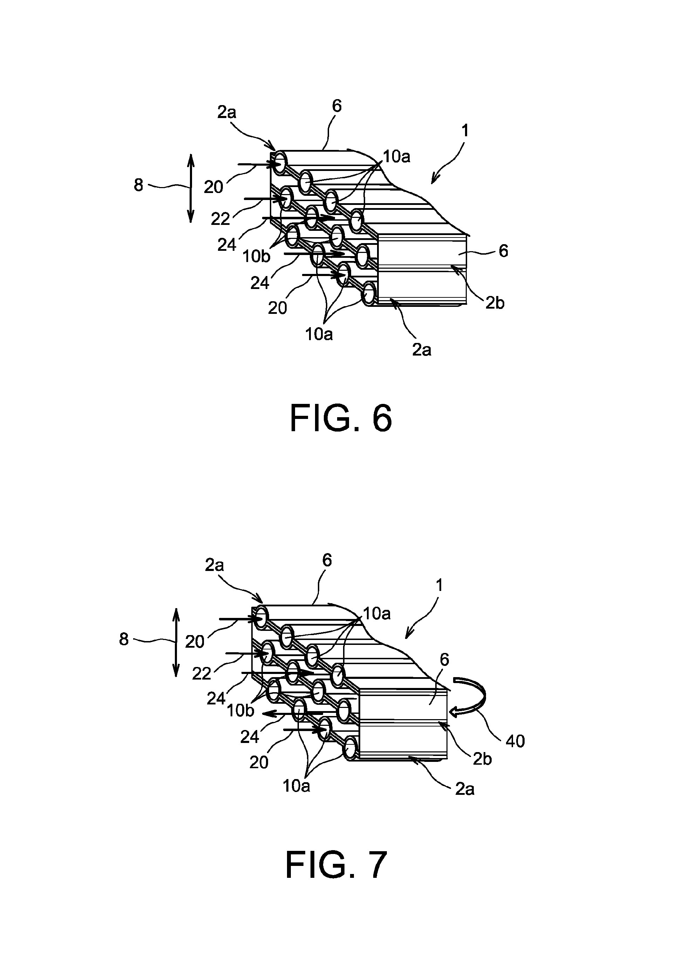

- les figures 6 et 7 représentent schématiquement deux façons distinctes de faire circuler le fluide à traiter dans le dispositif montré sur la figure 5.

En référence tout d'abord à la figure 1, on peut voir un dispositif de traitement 1 selon un premier mode de réalisation préféré de la présente invention, ce dispositif servant préférentiellement à nettoyer un mélange gazeux chargé en aérosols solides et/ou liquides, tel qu'un mélange gazeux issu d'un gazéifieur industriel, comprenant de l'hydrogène et du monoxyde de carbone. Ce dispositif s'avère particulièrement performant dans le dépoussiérage des particules d'aérosols, même celles réputées fines, à savoir présentant un diamètre moyen inférieur à 1 µm.

Le dispositif 1 comprend un premier et un second modules 2a, 2b, situés sensiblement parallèlement et en regard l'un de l'autre. Ils définissent entre eux un espace de passage 4 dans lequel le fluide à traiter est destiné à circuler. Comme visible sur la figure 1, des parois latérales 6 sont prévues aux extrémités des deux modules 2a, 2b empilés selon la direction d'empilement 8, afin de fermer latéralement l'espace de passage 4, et d'éviter que le fluide ne s'en échappe durant son traitement à travers le dispositif. Le premier module 2a, dit module chaud, présente une pluralité de premiers tubes 10a parallèles agencés au sein d'une rangée, et écartés les uns des autres dans le plan médian du module. Ils sont reliés entre eux par des éléments sensiblement plans. De la même manière, le second module 2b, dit module froid, présente une pluralité de seconds tubes 10b parallèles agencés au sein d'une rangée, et écartés les uns des autres dans le plan médian du module. Ils sont aussi reliés entre eux par des éléments sensiblement plans. Bien entendu, l'agencement présenté en figure 1 n'a pas de valeur limitative quant à son orientation dans l'espace, le dispositif pouvant être avantageusement positionné de manière verticale, sans que son fonctionnement n'en soit affecté.

L'une des particularités de la présente invention réside dans le fait de disposer les tubes parallèles 10a, 10b en quinconce, les premiers tubes 10a se trouvant globalement insérés entre les seconds tubes 10b, et inversement. Cela est notamment visible sur la figure 1 et la figure 2. Sur cette dernière, il est représenté une manière particulière de réaliser les modules 2a, 2b, qui va à présent être décrite. A cet égard, il est noté que la façon de réaliser les deux modules 2a, 2b étant identique ou similaire, seule la description de la réalisation du premier module 2a sera ici effectuée.

Le module chaud 2a est de préférence constitué à partir de deux tôles 12, 14, qui sont de préférence initialement planes et d'épaisseur sensiblement constante, puis déformées mécaniquement à l'aide d'outillages classiques. Ces déformations sont réalisées de manière à ce que la première tôle 12, ou tôle supérieure, présente en alternance des premières portions planes 16a et des premières portions formant demi-tubes 18a. Les premières portions planes 16a sont toutes agencées dans un même plan orthogonal à la direction d'empilement 8, tandis que les demi-tubes 18a sont orientés en étant ouverts vers le bas. D'une manière analogue, les déformations de la seconde tôle 14, ou tôle inférieure, sont réalisées de manière à ce que celle-ci présente en alternance des secondes portions planes 16b et des secondes portions formant demi-tubes 18b. Les secondes portions planes 16b sont toutes agencées dans un même plan orthogonal à la direction d'empilement 8, tandis que les demi-tubes 18b sont orientés en étant ouverts vers le haut.

Les deux tôles 12, 14 obtenues présentent alors chacune la forme d'une plaque gaufrée d'épaisseur sensiblement constante, particulièrement résistance à la pression.

Pour obtenir le module 2a après réalisation de chacune des deux tôles 12, 14 décrites ci-dessus, dont la première 12 est montrée sur la figure 2a, ces deux tôles 12, 14 sont plaquées l'une contre l'autre de manière à ce que les premières et secondes portions planes 16a, 16b soient en appui deux à deux, et de manière à ce que les premières et secondes portions formant demi-tubes 18a, 18b soient en regard deux à deux, de façon à former les tubes 10a du module 2a. Les portions planes 16a, 16b peuvent être assemblées deux à deux par soudage, ou bien par toute autre technique permettant de conférer une étanchéité aux tubes obtenus.

Les deux modules 2a, 2b sont ensuite empilés selon la direction 8 en faisant en sorte que la rangée de premiers tubes 10a se trouve agencée parallèlement et en quinconce avec la rangée de seconds tubes 10b.

Cela permet en particulier d'approcher au plus prêt le premier module 2a du second module 2b, puisqu'il est de préférence prévu que l'écartement E entre le plan P1 intégrant les axes des premiers tubes 10a, et le plan P2 intégrant les axes des seconds tubes 10b, soit inférieur au diamètre extérieur des tubes 10a, 10b. A cet égard, les tubes 10a, 10b sont effectivement de section sensiblement circulaire, et tous de diamètre sensiblement égal. En outre, il est indiqué que les plans P1 et P2 précités correspondent aux plans de jonction entre les première et seconde tôles 12, 14 constitutives des modules chaud et froid 2a, 2b.

Par ailleurs, il est fait en sorte que le pas p1 entre les premiers tubes 10a et le pas p2 entre les seconds tubes 10b sont identiques, de préférence égaux à deux fois la largeur des premiers et seconds tubes 10a, 10b, cette largeur correspondant donc ici au diamètre extérieur de ces premiers et seconds tubes.

Toujours à des fins de limitation de l'encombrement, les premiers tubes 10a sont centrés entre deux seconds tubes 10b, et inversement, comme visible sur la figure 2. Par conséquent, il est possible d'obtenir une distance minimum très faible entre un tube de l'un des modules et la portion plane en regard appartenant à l'autre module, cette distance minimale référencée « d » sur la figure 2 pouvant en effet être comprise entre 2 et 10 mm.

A cet égard, dans le but de maintenir la distance « d » sensiblement constante tout le long de la section considérée, il peut être avantageux d'introduire des portions courbes épousant, à la distance « d » près, la portion circulaire du tube en regard, en lieu et place des portions planes précitées.

Selon une alternative de réalisation montrée sur la figure 2b, le module 2a est obtenu à partir de portions planes 15a et des tubes 10a agencés en alternance, et rapportés fixement les uns aux autres, de préférence par soudage. Pour des raisons de clarté, la figure 2b montre les éléments 10a, 15a espacés les uns des autres, étant néanmoins précisé que ceux-ci sont bien entendu destinés à être au contact les uns des autres. Le module 2b est réalisé de façon identique.

La figure 2b' montre les deux modules 2a, 2b obtenus de la manière montrée sur la figure 2a. Chacun des deux modules comprend par exemple 24 tubes 10a, 10b espacés les uns des autres par les éléments 15a, 15b qui présentent une épaisseur d'environ 4 mm, contre une épaisseur d'environ 3,2 mm pour les tubes 10a, 10b. Chaque tube comprend de préférence une longueur d'environ 1,3 m, et un diamètre extérieur de l'ordre de 60 mm. En outre, tout comme pour la réalisation montrée sur la figure 2, les deux modules 2a, 2b sont superposés selon la direction d'empilement 8 de sorte que la distance minimum « d », selon cette direction 8, entre chaque tube 10a, 10b d'un module et la portion plane en regard 15a, 15b appartenant à l'autre module, est comprise entre 2 et 10 mm, et encore plus préférentiellement entre 2 et 5 mm.

De plus, comme cela sera expliqué ci-après, le nombre de modules empilés peut être supérieur à deux. A titre d'exemple, il peut s'agir d'un dispositif comprenant une trentaine de chacun des premier et second modules 2a, 2b arrangés en alternance.

Pour le traitement d'un mélange gazeux issu d'un gazéificateur ou d'un combusteur, celui-ci peut être introduit au sein du dispositif à une température élevée de l'ordre de 500 à 1000°C, sous une pression importante pouvant être comprise entre 5 et 40 bars. Compte tenu de ces conditions opératoires sévères en termes de pression et de température, il est de préférence retenu un acier à base de nickel pour la réalisation des tôles 12, 14. Il peut s'agir de l'IN617 ou le H230. Pour les applications nécessitant des conditions opératoires moins sévères, il est possible d'utiliser de l'acier inoxydable 310 ou encore un alliage 800H, ou encore un acier à base de nickel du type H600.

De retour à la figure 1, le premier module 2a est destiné à être porté à une température supérieure à celle du second module 2b, de manière à engendrer un gradient de température provoquant une force de thermophorèse capable de projeter les particules à épurer, contenues dans le mélange gazeux à traiter, en direction du second module. Pour ce faire, un premier fluide caloporteur chaud 20 est destiné à être introduit dans les premiers tubes 10a afin d'y circuler, et un second fluide caloporteur plus froid 22 est destiné à être introduit dans les seconds tubes 10b, également afin d'y circuler. Cela génère un gradient de température selon la direction d'empilement 8, gradient auquel est soumis le mélange gazeux 24 introduit dans l'espace de passage 4 du dispositif 1 afin d'y être traité. La température du mélange gazeux à traiter est préférentiellement comprise entre les températures du fluide caloporteur chaud et le fluide caloporteur froid. A titre indicatif, il est rappelé que le degré d'excitation des molécules du mélange gazeux transportant les particules à épurer dépend fortement de la température du milieu, en augmentant avec celle-ci. Ainsi, avec l'application du gradient de température obtenu grâce à la circulation des deux fluides 20, 22, les molécules de gaz se trouvant à l'endroit le plus chaud impactent les particules de faibles tailles présentes dans le gaz lorsqu'elles les croisent, en les orientant vers l'endroit plus froid où les molécules du mélange sont moins excitées. Par conséquent, les particules à éliminer, ici les aérosols, sont projetées en direction du module froid 2b, à la surface supérieure de laquelle ces particules vont adhérer au moyen d'autres forces telles que les forces de Van des Waals, électrostatiques, et/ou de capillarité. Alternativement, des moyens spécifiques de piégeage des particules atteignant le module froid 2b peuvent être prévus, sans sortir du cadre de l'invention.

En référence à la figure 3, il est montré un système de traitement 100 selon un premier mode de réalisation préféré de la présente invention, ce système incorporant le dispositif de traitement 1 ainsi que des moyens 26 permettant de faire circuler le fluide chaud 20 à travers les premiers tubes, des moyens 28 permettant de faire circuler le fluide froid 22 à travers les seconds tubes, et des moyens 30 permettant de faire circuler le mélange gazeux à traiter 24 entre les premier et second modules du dispositif.

Les moyens 26, 28, 30 permettant de faire circuler les fluides peuvent être de tout type connu de l'homme du métier, sans sortir du cadre de l'invention.

Ici, le fluide chaud 20 délivré par les moyens 26 est préférentiellement de l'air ou de la vapeur d'eau à moyenne ou haute pression, dont la température est rehaussée par son passage au sein d'un échangeur thermique 32, également traversé par le mélange gazeux chaud 24. Dans le cas particulier d'un gazéificateur ou d'un combusteur, cela permet par exemple d'abaisser la température du mélange gazeux 24 à environ 600°C avant qu'il pénètre dans le dispositif 1, et de porter la température du fluide chaud à 800°C ou plus. En outre, le fluide froid 22 délivré par les moyens 28 est préférentiellement de l'air ou de la vapeur d'eau à moyenne ou haute pression, dont la température est rehaussée par son passage au sein d'un réchauffeur électrique 34. Cela permet par exemple de porter la température du fluide froid à 280°C ou plus, pour éviter tout problème de condensation des goudrons pouvant se trouver dans le gaz issu d'un gazéifieur ou d'un combusteur.

Pour assurer un traitement efficace et performant, le coefficient d'échange thermique des fluides froid et chaud est compris entre 100 et 300 W/m²/K, tandis que le coefficient d'échange thermique du mélange gazeux à traiter est compris entre 20 et 100 W/m²/K, afin que ce dernier ne serve que de pont pour l'échange thermique. De préférence, le coefficient est sensiblement le même pour les deux fluides, ou ne diffèrent pas l'un de l'autre de plus de 20%.

Cela garantit en effet un gradient thermique sensiblement constant le long du dispositif 1, ce critère étant d'ailleurs principalement obtenu avec la mise en oeuvre de vitesses de circulation élevées des fluides 20, 22 à travers leurs tubes respectifs. A titre indicatif, ces vitesses peuvent être de l'ordre de 20 à 60 m/s.

En revanche, toujours dans le but d'un traitement efficace, la vitesse de circulation du mélange de gaz à traiter dans le dispositif 1 est préférentiellement faible, inférieure à 3 m/s. Il s'agit en effet de maintenir au mieux le gaz dans un écoulement nettement laminaire, de manière à ce que l'établissement des profils thermique et hydraulique soit de courte longueur, et de façon à augmenter le temps de passage au sein du dispositif. A contrario, pour éviter tout dépôt non désiré de particules dans l'échangeur 32, le mélange gazeux est mis en mouvement au sein de ce dernier avec une vitesse élevée, par exemple de l'ordre de 20 à 60 m/s, conduisant à des temps de passage dans l'échangeur de courtes durées, réduisant ainsi la probabilité de dépôt. Ainsi, même si un dépôt de particules se produit dans l'échangeur, par exemple sous l'effet de la force de thermophorèse, la vitesse élevée facilite le réentraînement de ce dépôt avec le reste du mélange gazeux.

Dans le second mode de réalisation préféré du système 100 montré sur la figure 4, la configuration est inversée par rapport au premier mode, puisque c'est le fluide chaud 20 qui voit sa température rehaussée par le réchauffeur électrique 34, et le fluide froid 22 qui voit sa température rehaussée par son passage au sein de l'échangeur thermique 32, également traversé par le mélange gazeux 24 à traiter.

Ces deux solutions pour la réalisation du système de traitement 100 peuvent donc être réalisées avec le dispositif 1 décrit en relation avec les figures 1 à 2a, ou encore avec un dispositif de traitement 1 selon un second mode de réalisation préféré, représenté sur la figure 5.

Dans ce second mode, il est en plus adjoint un autre module chaud 2a positionné sous le module froid 2b, portant à trois le nombre de modules 2a, 2b empilés en alternance selon la direction 8. Ainsi, cela permet de créer un second espace 4 de passage du mélange gazeux à traiter, toujours entre un module chaud 2a et un module froid 2b.

Le mélange gazeux 24 peut être introduit à co-courant simultanément dans les deux espaces de passage 4, comme le montre la figure 6. Une alternative consiste à prévoir que le mélange gazeux 24 est introduit seulement dans l'un des deux espaces 4, puis retourné à l'aide de moyens adéquates (non représentés) pour être ensuite introduit dans l'autre espace de passage 4, à contre-courant comme montré schématiquement par la flèche 40 de la figure 7. Cette dernière solution permet de réduire la longueur du dispositif de traitement, et se révèle donc particulièrement adaptée lorsque le gradient de température reste difficile à maintenir sensiblement constant sur une grande longueur de dispositif.

Bien entendu, le nombre de modules caloporteurs 2a, 2b empilés en alternance pourrait être supérieur à trois, sans sortir du cadre de l'invention.

Enfin, dans chacun des modes de réalisation préférés, le sens de circulation des fluides chaud et froid 20, 22 peut être fixé librement.

Bien entendu, diverses modifications peuvent être apportées par l'homme du métier à l'invention qui vient d'être décrite, uniquement à titre d'exemples non limitatifs.

## Revendications

1. Système de traitement (100) d'un fluide par force de thermophorèse comprenant un dispositif de traitement (1) comportant un premier et un second modules (2a, 2b) situés en regard l'un de l'autre et entre lesquels est destiné à circuler le fluide à traiter (24), le premier module (2a) étant destiné à être porté à une température supérieure à celle du second module de manière à engendrer un gradient de température provoquant une force de thermophorèse capable de projeter les particules à épurer, contenues dans le fluide à traiter, en direction du second module (2b),
**caractérisé en ce que** ledit premier module (2a) comprend une succession de premiers tubes parallèles (10a) reliés entre eux et destinés à être traversés par un premier fluide caloporteur (20) dit fluide chaud,
**en ce que** ledit second module (2b) comprend une succession de seconds tubes parallèles (10b) reliés entre eux et destinés à être traversés par un second fluide caloporteur (22) dit fluide froid,
**en ce que** les premiers tubes (10a) sont disposés en quinconce avec les seconds tubes (10b),
et **en ce que** ledit système comprend en outre :
- des moyens (26) permettant de faire circuler ledit fluide chaud (20) à travers les premiers tubes (10a) du premier module (2a) ;
- des moyens (28) permettant de faire circuler ledit fluide froid (22) à travers les seconds tubes (10b) du second module (2b) ; et
- des moyens (30) permettant de faire circuler ledit fluide à traiter (24) entre lesdits premier et second modules (2a, 2b).

2. Système de traitement selon la revendication 1, **caractérisé en ce que** le pas (p1) entre les premiers tubes (10a) et le pas (p2) entre les seconds tubes (10b) sont identiques, de préférence égaux à deux fois la largeur des premiers et seconds tubes.

3. Système de traitement selon l'une quelconque des revendications précédentes, **caractérisé en ce que** lesdits premiers et seconds tubes (10a, 10b) présentent chacun une section circulaire.

4. Système de traitement selon l'une quelconque des revendications précédentes, **caractérisé en ce qu'**il comprend un nombre de premier (s) et de second(s) modules (2a, 2b) supérieur ou égal à trois, disposés en alternance selon une direction d'empilement (8) .

5. Système de traitement selon l'une quelconque des revendications précédentes, **caractérisé en ce que** les deux modules (2a, 2b) sont superposés selon une direction d'empilement (8) de sorte que la distance minimum (d), selon la direction (8), entre chaque tube d'un module et la portion en regard appartenant à l'autre module, est comprise entre 2 et 10 mm, et de préférence entre 2 et 5 mm.

6. Système de traitement selon l'une quelconque des revendications précédentes, **caractérisé en ce qu'**il comporte en outre un échangeur thermique (32) à travers lequel circulent, avant leur entrée dans ledit dispositif de traitement (1), le fluide à traiter (24) ainsi que l'un desdits fluides chaud et froid (20, 22), de façon à ce que ce dernier soit réchauffé par ledit fluide à traiter.

7. Système de traitement selon l'une quelconque des revendications précédentes, **caractérisé en ce qu'**il comporte en outre un réchauffeur électrique (34) permettant de réchauffer au moins l'un desdits fluides chaud et froid (20, 22) avant son entrée dans ledit dispositif de traitement (1).

8. Procédé de traitement d'un fluide par force de thermophorèse mis en oeuvre à l'aide d'un système de traitement selon l'une quelconque des revendications précédentes, ledit procédé étant réalisé en faisant circuler ledit fluide chaud à travers les premiers tubes du premier module, en faisant circuler ledit fluide froid à travers les seconds tubes du second module, et en faisant circuler ledit fluide à traiter entre lesdits premier et second modules.

9. Procédé selon la revendication 8, mis en oeuvre en appliquant au moins l'un des paramètres suivantes :
- la vitesse du fluide à traiter au sein du dispositif est inférieure à 3 m/s ;
- la vitesse des fluides froid et chaud au sein du dispositif est comprise entre 20 et 60 m/s ;
- le fluide chaud présente une température supérieure ou égale à 800°C ;
- le fluide froid présente une température supérieure ou égale à 280°C ;
- le coefficient d'échange thermique des fluides froid et chaud est compris entre 100 et 300 W/m²/K ; et
- le coefficient d'échange thermique du fluide à traiter est compris entre 20 et 100 W/m²/K.

## Patentansprüche

1. Aufbereitungssystem (100) zum Aufbereiten eines Fluids durch thermophoretische Kraft, enthaltend eine Aufbereitungsvorrichtung (1) mit einem ersten und einem zweiten Modul (2a, 2b), die einander gegenüberliegen und zwischen denen das aufzubereitende Fluid (24) hindurchfließen soll, wobei das erste Modul (2a) dazu bestimmt ist, auf eine Temperatur gebracht zu werden, die höher als die des zweiten Moduls ist, so dass ein Temperaturgradient erzeugt wird, der eine thermophoretische Kraft bewirkt, die in der Lage ist, auszuscheidende Partikel, die in dem aufzubereitenden Fluid enthalten sind, in Richtung des zweiten Moduls (2b) zu leiten,
**dadurch gekennzeichnet, dass** das erste Modul (2a) eine Folge von ersten parallel verlaufenden Röhren (10a) aufweist, die miteinander verbunden und dazu bestimmt sind, von einem ersten Wärmeträgerfluid (20), dem sogenannten heißen Fluid, durchströmt zu werden,
dass das zweite Modul (2b) eine Folge von zweiten parallel verlaufenden Röhren (10b) aufweist, die miteinander verbunden und dazu bestimmt sind, von einem zweiten Wärmeträgerfluid (20), dem sogenannten kalten Fluid, durchströmt zu werden,
dass die ersten Röhren (10a) auf Lücke mit den zweiten Röhren (10b) angeordnet sind,
und dass das System ferner enthält:
- Mittel (26), über welche das heiße Fluid (20) durch die ersten Röhren (10a) des ersten Moduls (2a) strömen kann;
- Mittel (28), über welche das kalte Fluid (22) durch die zweiten Röhren (10b) des zweiten Moduls (2b) strömen kann; und
- Mittel (30), über welche das aufzubereitende Fluid (24) zwischen dem ersten und dem zweiten Modul (2a, 2b) strömen kann.

2. Aufbereitungssystem nach Anspruch 1, **dadurch gekennzeichnet, dass** die Teilung (p1) zwischen den ersten Röhren (10a) und die Teilung (p2) zwischen den zweiten Röhren (10b) identisch sind, vorzugsweise gleich der zweifachen Breite der ersten und zweiten Röhren.

3. Aufbereitungssystem nach einem der vorangehenden Ansprüche, **dadurch gekennzeichnet, dass** die ersten und zweiten Röhren (10a, 10b) jeweils einen kreisförmigen Querschnitt haben.

4. Aufbereitungssystem nach einem der vorangehenden Ansprüche, **dadurch gekennzeichnet, dass** es eine Anzahl von ersten und zweiten Modulen (2a, 2b) größer oder gleich drei enthält, welche in einer Stapelrichtung (8) abwechselnd angeordnet sind.

5. Aufbereitungssystem nach einem der vorangehenden Ansprüche, **dadurch gekennzeichnet, dass** die beiden Module (2a, 2b) in einer Stapelrichtung (8) so übereinanderliegen, dass der Mindestabstand (d) zwischen jeder Röhre eines Moduls und dem dem anderen Modul angehörenden gegenüberliegenden Abschnitt in der Richtung (8) zwischen 2 und 10 mm, vorzugsweise zwischen 2 und 5 mm beträgt.

6. Aufbereitungssystem nach einem der vorangehenden Ansprüche, **dadurch gekennzeichnet, dass** es ferner einen Wärmetauscher (32) aufweist, durch den hindurch vor deren Einströmen in die Aufbereitungsvorrichtung (1) das aufzubereitende Fluid (24) und eines aus heißem bzw. kaltem Fluid (20, 22) hindurchströmen, so dass letzteres über das aufzubereitende Fluid erhitzt wird.

7. Aufbereitungssystem nach einem der vorangehenden Ansprüche, **dadurch gekennzeichnet, dass** es ferner einen elektrischen Heizer (34) aufweist, mit dem zumindest eines aus heißem bzw. kaltem Fluid (20, 22) vor dessen Einströmen in die Aufbereitungsvorrichtung (1) erhitzt werden kann.

8. Aufbereitungsverfahren zum Aufbereiten eines Fluids durch thermophoretische Kraft, das mit Hilfe eines Aufbereitungssystems nach einem der vorangehenden Ansprüche durchgeführt wird, wobei das Verfahren durch Strömen des heißen Fluids durch die ersten Röhren des ersten Moduls, durch Strömen des kalten Fluids durch die zweiten Röhren des zweiten Moduls und durch Strömen des aufzubereitenden Fluids zwischen dem ersten und dem zweiten Modul hindurch durchgeführt wird.

9. Verfahren nach Anspruch 8, das durch Anwenden zumindest eines der nachfolgenden Parameter durchgeführt wird:
- die Strömungsgeschwindigkeit des aufzubereitenden Fluids innerhalb der Vorrichtung liegt unter 3 m/s;
- die Strömungsgeschwindigkeit des kalten und des heißen Fluids innerhalb der Vorrichtung liegt zwischen 20 und 60 m/s;
- das heiße Fluid weist eine Temperatur höher oder gleich 800 °C auf;
- das kalte Fluid weist eine Temperatur höher oder gleich 280 °C auf;
- der Wärmetauschkoeffizient des kalten und des heißen Fluids liegt zwischen 100 und 300 W/m²/K; und
- der Wärmetauschkoeffizient des aufzubereitenden Fluids liegt zwischen 20 und 100 W/m²/K.

## Claims

1. A treatment system (100) for fluid by force of thermophoresis comprising a treatment device (1) comprising first and second modules (2a, 2b) located opposite one another and between which is intended to circulate the fluid to be treated (24), the first module (2a) being intended to be brought to a temperature greater than that of the second module so as to engender a temperature gradient causing a force of thermophoresis capable of projecting the particles to be purified, contained in the fluid to be treated, in the direction of the second module (2b),
**characterised in that** said first module (2a) comprises a succession of parallel first tubes (10a) connected together and intended to be traversed by first heat-transfer fluid (20) known as hot fluid,
**in that** said second module (2b) comprises a succession of parallel second tubes (10b) connected together and intended to be traversed by a second heat-transfer fluid (22) known as cold fluid,
**in that** the first tubes (10a) are arranged staggered with the second tubes (10b),
and **in that** said system further comprises:
- means (26) for circulating said hot fluid (20) through the first tubes (10a) of the first module (2a) ;
- means (28) for circulating said cold fluid (22) through the second tubes (10b) of the second module (2b); and
- means (30) for circulating said fluid to be treated (24) between said first and second modules (2a, 2b).

2. The treatment system as claimed in Claim 1, **characterised in that** the pitch (p1) between the first tubes (10a) and the pitch (p2) between the second tubes (10b) are identical, preferably equal to twice the width of the first and second tubes.

3. The treatment system as claimed in any one of the preceding claims, **characterised in that** said first and second tubes (10a, 10b) each have a circular cross-section.

4. The treatment system as claimed in any one of the preceding claims, **characterised in that** it comprises a number of first and second modules (2a, 2b) greater than or equal to three, arranged alternatingly according to a stacking direction (8).

5. The treatment system as claimed in any one of the preceding claims, **characterised in that** the two modules (2a, 2b) are superposed according to a stacking direction (8) such that the minimum distance (d), according to the direction (8), between each tube of a module and the portion opposite belonging to the other module, is between 2 and 10 mm, and preferably between 2 and 5 mm.

6. The treatment system as claimed in any one of the preceding claims, **characterised in that** it further comprises a thermal exchanger (32) through which circulate, prior to their entry to said treatment device (1), the fluid to be treated (24) and either of said hot and cold fluids (20, 22), such that the latter is reheated by said fluid to be treated.

7. The treatment system as claimed in any one of the preceding claims, **characterised in that** it further comprises an electric reheater (34) for reheating at least one of said hot and cold fluids (20, 22) before its entry to said treatment device (1).

8. A fluid treatment process by force of thermophoresis carried out by means of a treatment system as claimed in any one of the preceding claims, said process being realised by circulating said hot fluid through the first tubes of the first module, by circulating said cold fluid through the second tubes of the second module, and by circulating said fluid to be treated between said first and second modules.

9. The process as claimed in Claim 8, carried out by applying at least one of the following parameters:
- the speed of the fluid to be treated inside the device is less than 3 m/s;
- the speed of the hot and cold fluids inside the device is between 20 and 60 m/s;
- the hot fluid has a temperature greater than or equal to 800°C;
- the cold fluid has a temperature greater than or equal to 280°C;
- the thermal exchange coefficient of the hot and cold fluids is between 100 and 300 W/m²/K; and
- the thermal exchange coefficient of the fluid to be treated is between 20 and 100 W/m²/K.
